# FASCICULE DE BREVET EUROPEEN

(11) **EP 2 155 551 B1**
(45) Date de publication et mention de la délivrance du brevet: **19.02.2014**
(21) Numéro de dépôt: 08826402.3
(22) Date de dépôt: 12.06.2008
(51) Int. Cl.: B64C 25/60, F16F 9/06

(54) **AMORTISSEUR POUR ATTERRISSEUR D'AÉRONEF**
STOSSDÄMPFER FÜR EIN FLUGZEUGFAHRWERK
SHOCK ABSORBER FOR AIRCRAFT LANDING GEAR

(30) Priorité: 15.06.2007 FR 0704306
(43) Date de publication de la demande: 24.02.2010
(73) Titulaire: Messier-Bugatti-Dowty, 78140 Velizy Villacoublay (FR)
(72) Inventeur: MASSON, Richard, F-78350 Buc (FR); PICARD, Stéphane, F-45720 Freville-en-Gatinais (FR)
(74) Mandataire: Parzy, Benjamin Alain
(86) Numéro de dépôt international: PCT/FR2008/000799
(87) Numéro de publication internationale: WO 2009/010643

(56) Documents cités:
- EP-A- 0 881 408
- EP-A- 1 574 427
- EP-A- 1 588 939
- GB-A- 2 412 954
- US-A- 2 909 368
- US-A- 3 540 683

## Description

L'invention concerne un amortisseur d'atterrisseur, à transfert de fluide rapide.

### ARRIERE-PLAN DE L'INVENTION

Les atterrisseurs comportent des amortisseurs présentant différentes chambres qui sont séparées par diverses parois ou séparations présentant des orifices de laminage et qui sont remplies de fluide hydraulique et de gaz sous pression. Un tel amortisseur est connu de U,S 2,909,368 A1, qui est considéré comme l'art antérieur le plus proche et décrit les caractéristiques du préambule de la revendication 1. Lorsque l'atterrisseur est en position déployée, l'amortisseur est en général en position sensiblement verticale, de sorte que, par différence de densité, le gaz se trouve en haut et le fluide hydraulique se trouve en bas dans l'amortisseur.

Cependant, lorsque l'atterrisseur est en position repliée dans les soutes de l'aéronef, le fluide hydraulique et le gaz se répartissent progressivement dans les diverses chambres de l'amortisseur, en passant par les orifices de laminage. En particulier, le gaz remplit partiellement une chambre dite chambre d'huile, située sous une séparation, appelée diaphragme, barrant l'intérieur de l'amortisseur. Lorsque l'atterrisseur est ramené en position déployée préalablement à un atterrissage, le fluide hydraulique et le gaz sous pression migrent pour revenir progressivement à leur état initial en passant par les orifices de laminage. Cependant, ce retour à l'état initial peut être assez long, de sorte que dans certaines circonstances, il se pourrait que l'aéronef atterrisse alors que le fluide hydraulique n'ait pas rempli entièrement la chambre d'huile située sous le diaphragme.

### OBJET DE L'INVENTION

L'invention a pour objet un amortisseur permettant un retour rapide des fluides (hydraulique ou gazeux) à leur position nominale propice à l'atterrissage dans laquelle la chambre qui s'étend sous le diaphragme est remplie uniquement de fluide hydraulique.

### BREVE DESCRIPTION DE L'INVENTION

Selon l'invention, on propose un amortisseur pour atterrisseur d'aéronef ayant deux éléments montés pour coulisser télescopiquement l'un dans l'autre et définissant un volume interne rempli de fluide hydraulique et de gaz et séparé en au moins deux chambres par une séparation comportant au moins un orifice de laminage par lequel le fluide hydraulique transite d'une chambre à l'autre notamment lors d'une compression de l'amortisseur. Selon l'invention, la séparation comporte au moins un orifice de dégazage pour permettre le transfert de gaz d'une chambre à l'autre lorsque l'atterrisseur est en position déployée, l'orifice de dégazage étant décalé en hauteur par rapport à l'orifice de laminage pour se trouver au dessus de ce dernier lorsque l'atterrisseur est en position déployée.

Le fluide hydraulique qui stagne par-dessus la séparation et qui doit revenir sous la séparation par gravité a alors le choix de passer par l'orifice de laminage ou par l'orifice de dégazage. Or la pression du fluide au niveau de l'orifice de laminage est supérieure à celle qui règne dans le fluide au niveau de l'orifice de dégazage, du fait de la différence de hauteur. Le fluide passe donc préférentiellement par l'orifice de laminage, tandis que le gaz se trouvant sous la séparation passe préférentiellement par l'orifice de dégazage. Cette spécialisation des orifices permet un transfert bien plus rapide des fluides, diminuant considérablement le temps de retour à la situation nominale dans laquelle la chambre sous la séparation est remplie uniquement de fluide hydraulique.

### BREVE DESCRIPTION DES DESSINS

L'invention sera mieux comprise à la lumière de la description qui suit en référence aux figures des dessins annexés parmi lesquelles :
- la figure 1 est une vue en coupe d'un amortisseur d'atterrisseur d'aéronef, en situation d'atterrissage nominale ;
- la figure 2 est une vue en coupe analogue à celle de la figure 1, montrant la situation des fluides à l'intérieur de l'amortisseur juste après le déploiement de l'atterrisseur ;
- la figure 3 est une vue en perspective partielle montrant le diaphragme et la colonne qui équipent l'amortisseur des figures 2 et 3.

### DESCRIPTION DETAILLEE DE L'INVENTION

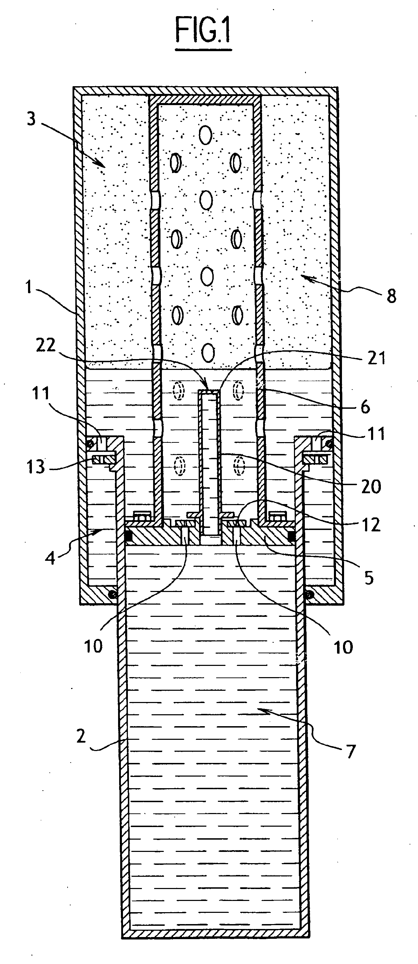

En référence à la figure 1, l'amortisseur comporte un caisson 1 dans lequel une tige 2 est montée à coulissement télescopique. Le caisson 1 et la tige définissent entre eux d'une part un volume principal 3, et d'autre part une chambre annulaire 4, tous deux de volume variable avec le coulissement de la tige 2 dans le caisson 1.

Une séparation ou diaphragme 5, porté par un tube plongeur 6, divise le volume principal 3 en deux chambres : d'une part une chambre d'huile 7, s'étendant sous le diaphragme 5 et délimité par la tige 2, et d'autre part une chambre d'air 8 s'étendant par-dessus le diaphragme 5.

L'intérieur de l'amortisseur est rempli de fluide hydraulique (symbolisé par des petits traits horizontaux) et de gaz (symbolisé par des points). Le fluide hydraulique remplit la chambre d'huile 7, la chambre annulaire 4, et une partie de la chambre d'air 8. Le reste de la chambre d'air 8 est rempli de gaz sous pression.

Lors de la compression de l'amortisseur, du fluide hydraulique est transvasé par l'intermédiaire des orifices de laminage 10 portées par le diaphragme 5 de la chambre d'huile 7 à la chambre d'air 8. Dans le même temps, du fluide hydraulique est transvasé par l'intermédiaire d'orifices de laminage 11 portés par la tige 2 de la chambre d'air 8 à la chambre annulaire 4.

Les transferts inverses ont lieu lors de la détente de l'amortisseur. A cet égard, des clapets 12,13 viennent couvrir les orifices de laminage 10, 11 pour en limiter le diamètre de passage, et ainsi contrôler la vitesse de détente de l'amortisseur.

Selon l'invention, le diaphragme 5 porte une colonne creuse 20, ici placée en position centrale, qui s'étend vers le haut dans la chambre d'air 8 (quand l'atterrisseur est en position déployée, prêt à l'atterrissage, comme illustré ici). La colonne 20 débouche largement dans la chambre d'huile 8 et est terminée à son extrémité supérieure par une cloison 21 comportant un orifice de dégazage 22, ici de section plus petite que la section des orifices de laminage.

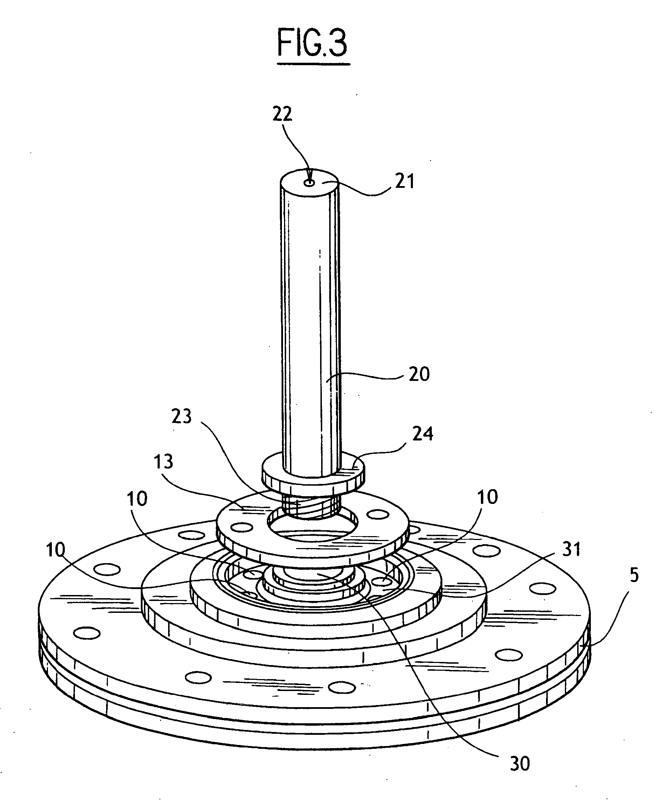

Comme cela est plus nettement visible à la figure 3, le diaphragme 5 comporte un taraudage central 30 pour recevoir l'extrémité inférieure filetée 23 de la colonne 20. La colonne 20 comporte ici une collerette 24 pour emprisonner le clapet 13 entre la collerette 24 et un siège 31 du diaphragme 5 entre lesquels le clapet 13 se déplace verticalement au gré du sens des flux de fluide hydraulique transitant par les orifices de laminage 10.

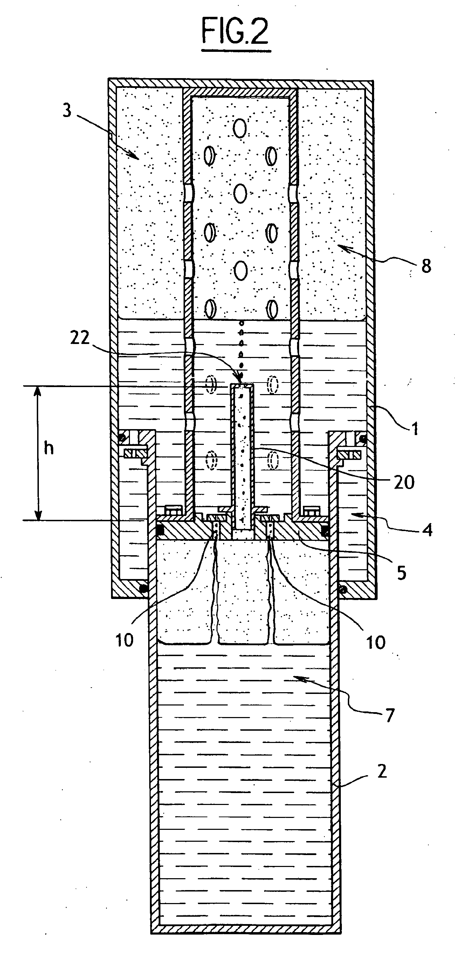

Le fonctionnement du dispositif est maintenant expliqué en relation avec la figure 2. Sur cette figure, on voit l'état de l'amortisseur lorsque l'atterrisseur vient juste d'être déployé. L'atterrisseur est resté en position repliée selon un angle allant typiquement de 80 à 110 degrés, parfois pendant plusieurs heures, et les fluides (hydraulique ou gazeux) ont eu le temps de se répartir dans tout l'amortisseur, le gaz par-dessus le fluide hydraulique. Lors de son déploiement, le gaz se trouvant sous le diaphragme 5 reste piégé dans la chambre d'huile 7, et il convient d'attendre que la gravité ramène le gaz vers la chambre d'air 8.

Ici, entre les orifices de laminage 10 et l'orifice de dégazage 22 existe une différence de hauteur h de sorte que la pression régnant dans le fluide au niveau des orifices de laminage 10 est légèrement plus forte que la pression régnant dans le fluide au niveau de l'orifice de dégazage 22.

Cette légère différence de pression favorise l'écoulement de fluide hydraulique par les orifices de laminage 10, ce qui amène le gaz à s'écouler préférentiellement par l'orifice de dégazage 22. Des expériences ont montré que le temps de transvasement du fluide hydraulique et du gaz est considérablement réduit par rapport à un amortisseur ne disposant pas d'un orifice de dégazage décalé en hauteur, le gain de temps pouvant se monter à plusieurs minutes.

De préférence, la hauteur de la colonne est telle que l'orifice de dégazage reste noyé dans le fluide hydraulique, même lorsque le fluide hydraulique remplit entièrement la chambre d'huile 7, comme illustré à la figure 1.

L'invention n'est pas limitée à ce qui vient d'être décrit, mais bien au contraire englobe toute variante entrant dans le cadre défini par les revendications.

En particulier, bien que l'on ait indiqué que la séparation équipée de la colonne est le diaphragme de l'amortisseur, on pourra équiper toute autre séparation de la colonne de l'invention, par exemple ici la séparation ente la chambre d'air 8 et la chambre annulaire 4.

On pourra bien sûr disposer plusieurs orifices de dégazage, portés par une ou plusieurs colonnes. La disposition centrale de la colonne illustrée ici n'est pas limitative, et on pourra placer la colonne ailleurs sur la séparation.

Enfin, bien que l'on ait illustré une colonne rapportée, on pourra bien sûr, de façon équivalente, proposer une séparation en une pièce, présentant au moins un orifice de dégazage décalé en hauteur pour se trouver au dessus du ou des orifices de laminage lorsque l'atterrisseur est en position déployée. On pourra également, dans le cas d'une construction en deux pièces, rapporter la colonne sur la séparation par tout moyen connu, comme par exemple une soudure, ou une liaison par écrou.

## Revendications

1. Amortisseur pour atterrisseur d'aéronef ayant deux éléments (1,2) montés pour coulisser télescopiquement l'un dans l'autre et définissant un volume interne rempli de fluide hydraulique et de gaz et séparé en au moins deux chambres (7,8) par une séparation (5) comportant au moins un orifice de laminage (10) par lequel le fluide hydraulique transite d'une chambre à l'autre notamment lors d'une compression de l'amortisseur, **caractérisé en ce que** la séparation comporte au moins un orifice de dégazage (22) pour permettre un transfert de gaz d'une chambre à l'autre lorsque l'atterrisseur est en position déployée, l'orifice de dégazage (22) étant décalé en hauteur par rapport à l'orifice de laminage (10) pour se trouver au dessus de ce dernier lorsque l'atterrisseur est en position déployée.

2. Amortisseur selon la revendication 1, dans lequel l'orifice de dégazage est ménagé à l'extrémité haute d'une colonne creuse (20) qui est portée par la séparation et qui débouche dans la chambre (7) s'étendant sous la séparation (5).

3. Amortisseur selon la revendication 2, dans lequel la colonne est rapportée sur la séparation (5) et comporte une collerette (24) pour retenir un clapet (12) coulissant coopérant avec l'orifice de laminage (10) de la séparation (5).

4. Amortisseur selon la revendication 3, dans lequel la colonne est vissée dans la séparation.

5. Amortisseur selon la revendication 1, dans lequel l'orifice de dégazage est à une hauteur telle qu'il reste noyé par le fluide hydraulique même lorsque la chambre s'étendant sous la séparation est entièrement remplie de fluide hydraulique.

## Patentansprüche

1. Stoßdämpfer für ein Flugzeugfahrwerk, der zwei Elemente (1, 2) hat, die teleskopisch ineinander verschiebbar gelagert sind und ein Innenvolumen definieren, das mit Hydraulikfluid und Gas gefüllt ist und durch eine Trennwand (5), die mindestens eine Drosselöffnung (10) umfasst, durch die das Hydraulikfluid insbesondere während einer Kompression des Stoßdämpfers von einer Kammer in die andere gelangt, in mindestens zwei Kammern (7, 8) unterteilt ist, **dadurch gekennzeichnet, dass** die Trennwand mindestens eine Entgasungsöffnung (22) umfasst, um eine Übertragung des Gases von einer Kammer in die andere zu ermöglichen, wenn der Stoßdämpfer in einer ausgefahrenen Stellung ist, wobei die Entgasungsöffnung (22) in Bezug auf die Drosselöffnung (10) in der Höhe versetzt ist, damit sie sich über dieser letztgenannten befindet, wenn der Stoßdämpfer in der ausgefahrenen Stellung ist.

2. Stoßdämpfer nach Anspruch 1, wobei die Entgasungsöffnung am oberen Ende einer hohlen Säule (20) ausgebildet ist, die von der Trennwand getragen wird und die in die Kammer (7) mündet, die sich unter der Trennwand (5) erstreckt.

3. Stoßdämpfer nach Anspruch 2, wobei die Säule an der Trennwand (5) befestigt ist und einen Bund (24) umfasst, um ein verschiebbares Ventilelement (12), das mit der Drosselöffnung (10) der Trennwand (5) zusammenwirkt, zu halten.

4. Stoßdämpfer nach Anspruch 3, wobei die Säule in die Trennwand geschraubt ist.

5. Stoßdämpfer nach Anspruch 1, wobei sich die Entgasungsöffnung auf einer solchen Höhe befindet, dass sie in dem Hydraulikfluid eingetaucht bleibt, selbst wenn die Kammer, die sich unter der Trennwand erstreckt, vollständig mit Hydraulikfluid gefüllt ist.

## Claims

1. A shock-absorber for aircraft landing gear, the shock-absorber having two elements (1, 2) mounted to slide telescopically one in the other and defining an internal volume that is filled with hydraulic fluid and with gas, the internal volume being separated into at least two chambers (7, 8) by a separation (5) including at least one throttling orifice (10) through which the hydraulic fluid passes from one chamber to the other, in particular while the shock-absorber is being compressed, the shock-absorber being **characterized in that** the separation includes at least one degassing orifice (22) to enable gas to be transferred from one chamber to the other when the landing gear is in the deployed position, the degassing orifice (22) being offset vertically relative to the throttling orifice (10) so as to be located above it when the landing gear is in the deployed position.

2. A shock-absorber according to claim 1, wherein the degassing orifice is provided at the top end of a hollow column (20) that is carried by the separation and that opens out into the chamber (7) lying beneath the separation (5).

3. A shock-absorber according to claim 2, wherein the column is fitted on the separation (5) and includes a collar (24) for retaining a slidably-mounted valve member (12) that co-operates with the throttling orifice (10) in the separation (5).

4. A shock-absorber according to claim 3, wherein the column is screwed into the separation.

5. A shock-absorber according to claim 1, wherein the degassing orifice is of a height such that it remains immersed in the hydraulic fluid, even when the chamber extending under the separation is completely filled with hydraulic fluid.
